# EUROPÄISCHE PATENTSCHRIFT

(11) **EP 1 863 376 B1**
(45) Veröffentlichungstag und Bekanntmachung des Hinweises auf die Patenterteilung: **22.12.2010**
(21) Anmeldenummer: 06708671.0
(22) Anmeldetag: 07.03.2006
(51) Int. Cl.: A47L 9/28

(54) **STAUBSAUGER MIT EINFACH AUFGEBAUTER SIGNALÜBERTRAGUNGSEINRICHTUNG ZWISCHEN DEM STIEL UND/ODER VORSATZGERÄT UND DEM BASISTEIL**
VACUUM CLEANER COMPRISING A SIMPLE SIGNAL TRANSMISSION DEVICE ARRANGED BETWEEN THE HANDLE AND/OR ATTACHMENT AND THE BASE PART
ASPIRATEUR COMPRENANT UN DISPOSITIF DE TRANSMISSION DES SIGNAUX, A CONSTRUCTION SIMPLE, PLACE ENTRE LE MANCHE ET/OU L'APPAREIL ACCESSOIRE ET LA PARTIE DE BASE

(30) Priorität: 18.03.2005 DE 102005012455
(43) Veröffentlichungstag der Anmeldung: 12.12.2007
(73) Patentinhaber: Vorwerk & Co. Interholding GmbH, 42275 Wuppertal (DE)
(72) Erfinder: MEYER, Frank, 58640 Iserlohn (DE)
(74) Vertreter: Müller, Enno
(86) Internationale Anmeldenummer: PCT/EP2006/060521
(87) Internationale Veröffentlichungsnummer: WO 2006/097417

(56) Entgegenhaltungen:
- EP-A- 0 546 620
- WO-A-01/08544
- PATENT ABSTRACTS OF JAPAN Bd. 017, Nr. 468 (C-1102), 26. August 1993 (1993-08-26) -& JP 05 115399 A (YASHIMA DENKI KK), 14. Mai 1993 (1993-05-14)

## Beschreibung

Die Erfindung betrifft einen Staubsauger mit den Merkmalen des Oberbegriffes des Anspruches 1. Ein derartiger Straubsauger ist beispielsweise durch die EP-A-0 546 620 bekannt geworden.

Staubsauger der in Rede stehenden Art sind bekannt. Zur Signalübertragung zwischen dem den Elektromotor und weiter bevorzugt eine Gebläseeinheit aufweisenden Basisteil und dem, weiter bevorzugt einen Betätigungsgriff aufweisenden Stiel bzw. dem Vorsatzgerät ist es bekannt, Kabel vorzusehen, die im Bereich der Steckverbindung zwischen Stiel und Basisteil bzw. zwischen Basisteil und Vorsatzgerät in entsprechende Stecker bzw. Steckeraufnahmen münden. Ein über den Betätigungsgriff eingeprägtes Signal wird hierbei über das Kabel in das Basisteil geleitet, wo es vom Signalempfänger entsprechend ausgewertet wird. Gleiches gilt für das Vorsatzgerät, welches beispielsweise in Abhängigkeit von der Bodenbelagsqualität ein Signal generiert, welches über das Kabel dem Basisgerät übermittelt wird. Entsprechend kann die Saugleistung des Basisteils an den zu pflegenden Bodenbelag angepasst werden. Auch ist diesbezüglich bekannt, zur Signalübertragung Infrarotlicht einzusetzen, wobei einer Seite ein Sender und der anderen Seite ein Empfänger zugeordnet ist. Hier wird beispielsweise auf die DE 69218357 T2 verwiesen. Eine derartige Ausgestaltung erweist sich dahingehend als nachteilig, da neben dem den Elektromotor aufweisenden Basisteil auch die weiter steckverbindbaren Teile wie Gerätestiel oder Vorsatzgerät über eine Stromquelle verfügen müssen, um den Sender bzw. Empfänger zu speisen.

Im Hinblick auf den zuvor beschriebenen Stand der Technik wird eine technische Problematik der Erfindung darin gesehen, einen Staubsauger der in Rede stehenden Art insbesondere hinsichtlich der Signalübertragung zwischen Basisteil und einem hiermit steckverbindbaren Stiel und/oder einem Vorsatzgerät weiter zu verbessern, dies bei möglichst einfachem Aufbau.

Diese Problematik ist beim Gegenstand des Anspruchs 1 gelöst, wobei darauf abgestellt ist, dass in dem Basisgerät eine Lichtquelle als Signalgeber angeordnet ist, dass das Signal durch eine Beeinflussung einer von dem Basisgerät ausgesandten Lichtwelle erzeugt ist, dass der Signalempfänger ein Lichtwellensensor ist und dass die Beeinflussung des Signals durch lediglich mechanische Verstellung eines Beeinflussungselements erreicht ist. Zufolge dieser erfindungsgemäßen Ausgestaltung ist eine Signalübertragung geschaffen, welche durch Aufbau eines nicht elektrischen Systems mit großer Signalbreite arbeiten kann. In dem das Grundgerät ausbildenden Basisteil wird eine Lichtquelle angeordnet, die gegebenenfalls moduliert und gegebenenfalls auch kohärentes Licht aussendet. Neben der Lichtquelle befindet sich im Basisteil ein lichtempfindlicher Sensor, so beispielsweise eine Fotozelle, der moduliertes oder reflektiertes Licht empfangen kann und an eine Auswertung weitergibt, so weiter beispielsweise zur Beeinflussung des basisteilseitigen Elektromotors. Zufolge dessen sind die elektrisch wirksamen Bauteile der Signalübertragungslogik im in der Regel ohnehin mit einer Stromquelle verbundenen Basisteil angeordnet. Die hierzu steckverbindbaren weiteren Staubsaugerteile wie insbesondere ein Führungsstiel und/oder ein Vorsatzgerät benötigen für die gewünschte Signalübertragung keine gesonderte Stromquelle. Insofern kann auch insbesondere die Steckverbindung zwischen Basisteil und Stiel rein mechanisch ausgeführt sein, das heißt ohne elektrische Steckverbinder. Solche können zwar noch im Steckverbindungsbereich zwischen Basisteil und Vorsatzgerät vorgesehen sein, jedoch lediglich bei Vorsatzgeräten, welche beispielsweise eine elektromotorisch angetriebene Bürste oder dergleichen aufweisen. Es ist entsprechend ein System geschaffen, welches anwendbar ist sowohl bei Einsatz von elektrisch versorgten Vorsatzgeräten als auch von rein saugdüsenartigen Vorsätzen. Die von der Lichtquelle ausgesandte Lichtwelle wird von dem Vorsatzgerät bzw. von dem Gerätestiel zur Signalübermittlung lediglich beeinflusst und in Richtung auf den Signalempfänger bzw. Lichtwellensensor gelenkt.

Das Beeinflussungselement kann beispielsweise im Bereich des stielseitigen Betätigungsgriffes über ein weiter beispielsweise daumenbetätigbares Stellelement in Form eines Schiebers oder dergleichen in seiner Ausrichtung bzw. Lage verändert werden, was wiederum eine entsprechende Beeinflussung der von dem Basisteil ausgesandten Lichtwelle bewirkt. Anhand der veränderten Lichtwelle ist mittels des Lichtwellensensors die jeweilige Stellung des Beeinflussungselements ermittelbar. Im Bereich eines Vorsatzgerätes kann das Beeinflussungselement beispielsweise über einen unterdruckbeaufschlagten Hebel oder dergleichen verstellt werden, so dass in Abhängigkeit von einem im Saugmund herrschenden Unterdruck eine entsprechende Verstellung des Beeinflussungselements erreicht wird, welche Stellung durch den die beeinflusste Lichtwelle aufnehmenden Lichtwellensensor in ein Signal zur Steuerung des Elektromotors gewandelt wird. In einfachster Weise kann das Beeinflussungselement ein Reflektionsteil sein. So beispielsweise eine Spiegeloptik oder eine Linse bzw. ein Prisma. Auch können über die Lichtwellenstrecke mehrere derartige Optiken oder auch eine Kombination derselben vorgesehen sein. In einfachster Weise wird die Lichtwelle hierbei zwischen dem Signalgeber und dem Beeinflussungselement und von diesem zurück zum Lichtwellensensor durch die Luft gelenkt. Alternativ kann zwischen der Lichtquelle und dem Beeinflussungselement ein Lichtleiter angeordnet sein, so weiter beispielsweise zwei Lichtleiter, wobei ein Lichtleiter zwischen der Lichtquelle und dem Beeinflussungselement und ein Lichtleiter zwischen dem Beeinflussungselement und dem Lichtwellensensor vorgesehen ist. Denkbar ist auch die Anordnung nur eines Lichtleiters, wobei die Lichtwellen getaktet ausgesandt und empfangen werden. Der Lichtleiter kann hierbei ein Glasfaserelement sein, alternativ auch ein Glaselement. Vorgeschlagen wird weiter, dass der Lichtleiter eine Lichtröhre ist. Auch kann der Lichtleiter ein transparentes Kunststoffteil sein. Die Modulation der Lichtwelle kann durch Weglängenänderung, so durch konstruktive bzw. destruktive Interferenz, durch Winkeländerung oder Dämpfung erfolgen. Bei der Weglängen- oder Winkeländerung können in vorteilhafter Weise die Prinzipien eines Michelson- oder Fabry Perot Interferometers eingesetzt werden. Diese optischen Bauteile bestehen zumeist aus zwei beschichteten, planparallelen Spiegeln, die in einem definierten Abstand zueinander montiert sind. Diese Spiegel können weiter aus Silizium bestehen. Bei einer Signalübertragung zwischen Basisteil und einem steckverbindbaren, in der Länge durch Teleskopierung veränderbaren Stiel erweist sich die Erfindung dahingehend weiter als vorteilhaft, da aufgrund der immer wiederkehrenden Interferenz das Signal auch bei unterster Teleskopstellung des Stiels eindeutig ist. Auch kann mittels einer Spiegel-Winkeloptik das eintreffende Licht auf eine Detektorkaskade im Basisteil gelenkt werden und somit unterschiedliche Positionen des Griffschiebers im Bereich des Betätigungsgriffes übertragen.

Nachstehend ist die Erfindung anhand der beigefügten Zeichnung, welche lediglich zwei Ausführungsbeispiele darstellt, näher erläutert. Es zeigt:
- Fig. 1: einen Staubsauger der in Rede stehenden Art in perspektivischer Darstellung;
- Fig. 2: den Führungsstiel des Staubsaugers und einen oberen Abschnitt des Staubsauger-Basisteils mit einer Signalvorrichtung in einer ersten Ausführungsform;
- Fig. 3: die perspektivische Herausvergrößerung des Bereiches III in Fig. 2;
- Fig. 4: eine der Fig. 2 entsprechende Darstellung, jedoch eine zweite Aus- führungsform der Signalvorrichtung betreffend und
- Fig. 5: die perspektivische Herausvergrößerung des Bereiches V in Fig. 4.

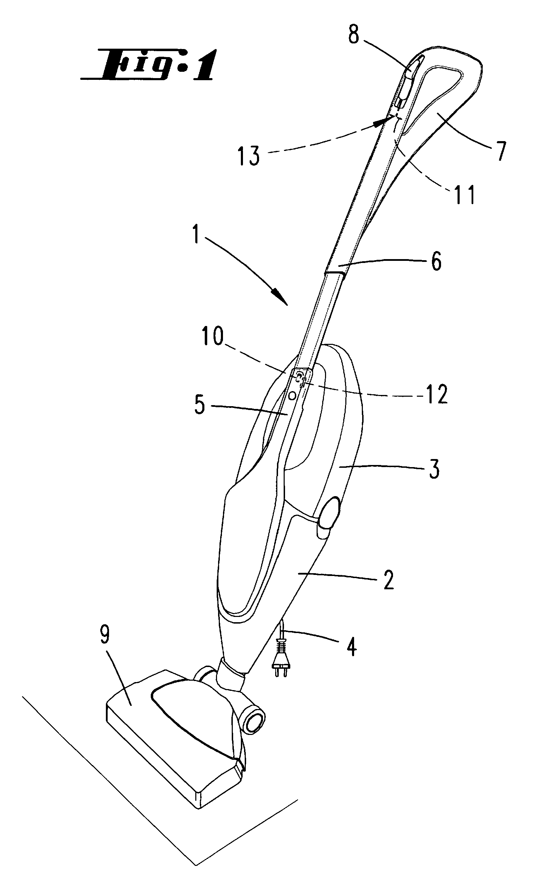

Dargestellt und beschrieben ist zunächst mit Bezug zu Figur 1 ein Staubsauger 1, insbesondere Haushalts-Staubsauger, welcher als handgerührtes Stielgerät ausgeführt ist. Dieses weist zunächst ein Basisteil 2 auf, mit einem nicht näher dargestellten Elektromotor und einer Saug-/Gebläse-Einheit. An dem Basisteil 2 ist zur Aufnahme des aufgesaugten Staubgutes eine Filterkassette 3 angedockt. Diese beinhaltet einen nicht dargestellten Filterbeutel.

Die Stromversorgung des in dem Basisteil 2 integrierten Elektromotors erfolgt über ein in das Basisteil 2 einlaufendes Elektrokabel 4.

Weiter besitzt das Basisteil 2 einen schwanenhalsförmigen Fortsatz, welcher sich über den Bereich der Filterkassette 3 erstreckt. Im Bereich des freien Endes formt dieser Fortsatz eine Steckaufnahme 5 für einen Stiel 6 des Staubsaugers 1 aus. Die zugeordneten Enden von Aufnahme 5 und Stiel 6 sind in bekannter Weise als Steckverbindungselemente ausgebildet.

Im Bereich des freien Endes des Stieles 6 ist ein Betätigungsgriff 7 ausgeformt. Dieser weist an ergonomisch günstiger Position einen bevorzugt daumenbetätigbaren Leistungssteller 8 auf. Über Letzteren ist die Leistung des in dem Basisteil 2 aufgenommenen Elektromotors einstellbar, zufolge dessen die Saugleistung des Staubsaugers 1 über den Leistungssteller 8 anpassbar ist beispielsweise an den Bodenbelag.

Zur Bodenbearbeitung ist das Basisteil 2 strömungsmäßig mit einem Vorsatzgerät 9 verbunden, welches in dem dargestellten Ausführungsbeispiel als eine, eine rotierende Bürste aufweisende Saugdüse ausgebildet ist.

Eine Leistungsregulierung des in dem Basisteil 2 aufgenommenen Elektromotors kann nicht nur über den betätigungsgriffseitigen Leistungssteller 8 erfolgen, sondern auch über das Vorsatzgerät 9, welches zur Regulierung des Elektromotors Informationen an das Basisteil 2 beispielsweise über die Beschaffenheit des zu reinigenden Bodens übermittelt.

Zur Steuerung des Elektromotors wird ein Signal vom Gerätestiel 6 bzw. vom Vorsatzgerät 9 zum Basisteil 2 geleitet und dort von einem Signalempfänger erfasst. Das ermittelte Signal wird mittels einer Auswerteelektronik zur Ansteuerung des Elektromotors genutzt.

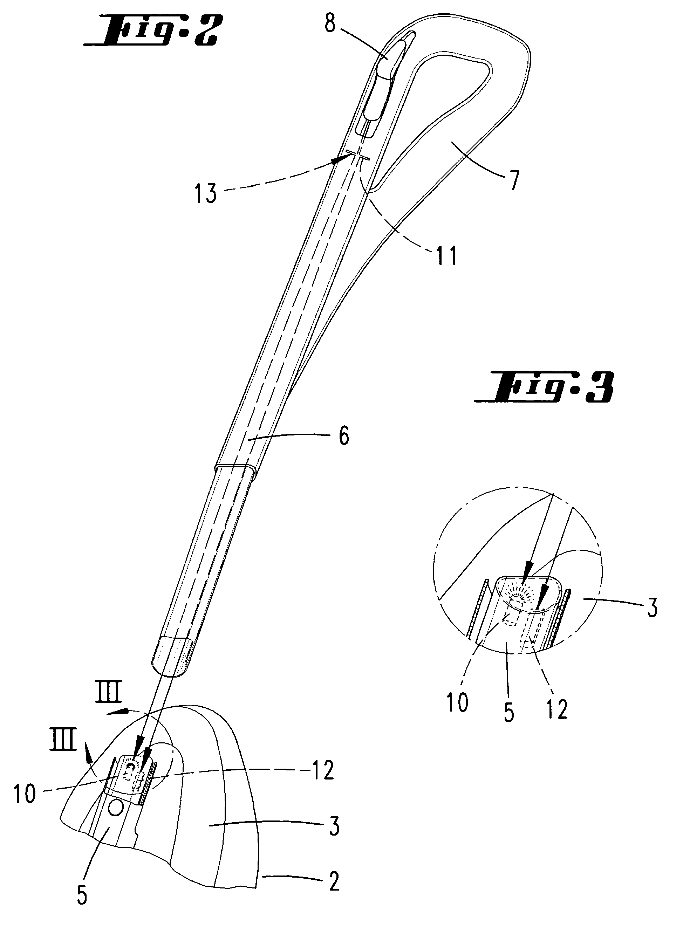

In den Figuren 2 und 3 ist eine erste Ausführungsform einer Signalvorrichtung dargestellt, welche zwischen Basisteil 2 und dem Betätigungsgriff 7 des Stieles 6 wirkt. Diese Signalvorrichtung dient zur Erfassung der Schiebestellung des Leistungsstellers 8. Hierzu ist in dem Basisteil 2 zunächst eine Lichtquelle 10 als Signalgeber angeordnet, dies im Bereich der den Stiel 6 steckhalternden Aufnahme 5 des Basisteils 2. Die von der Lichtquelle 10 ausgesandte Lichtwelle durchsetzt geradlinig den rohrartigen Stiel 6 bis in den Bereich des Leistungsstellers 8, welch letzterer rohrinnenseitig verbunden ist mit einem Reflektionsteil 11. Dieses kann in einfachster Weise ein Spiegel oder eine Linse sein. In Abhängigkeit von der Schiebeverlagerung des Leistungsstellers 8 wird auch das Reflektionsteil 11 schiebeverlagert, dies in Lichtwellenlaufrichtung.

Das Reflektionsteil 11 reflektiert entsprechend die von der Lichtquelle 10 ausgesandte Lichtwelle, die entsprechend in Richtung auf das Basisteil 2 zurückgeworfen wird. In Nachbarschaft zur Lichtquelle 10 ist ein Lichtwellensensor 12 als Signalempfänger angeordnet. Dieser kann das reflektierte Licht empfangen und an eine Auswertung weitergeben. Hierbei wird die Weglängenänderung, die durch Verlagerung des Leistungsstellers 8 und entsprechend des Reflektionsteils 11 erreicht ist, erkannt. Hierbei werden insbesondere die Prinzipien eines Michelson- oder Fabry Perot Interferometers eingesetzt. Aufgrund der immer wiederkehrenden Interferenz ist das Signal auch in einer untersten Teleskopstellung des Stiels 6 eindeutig.

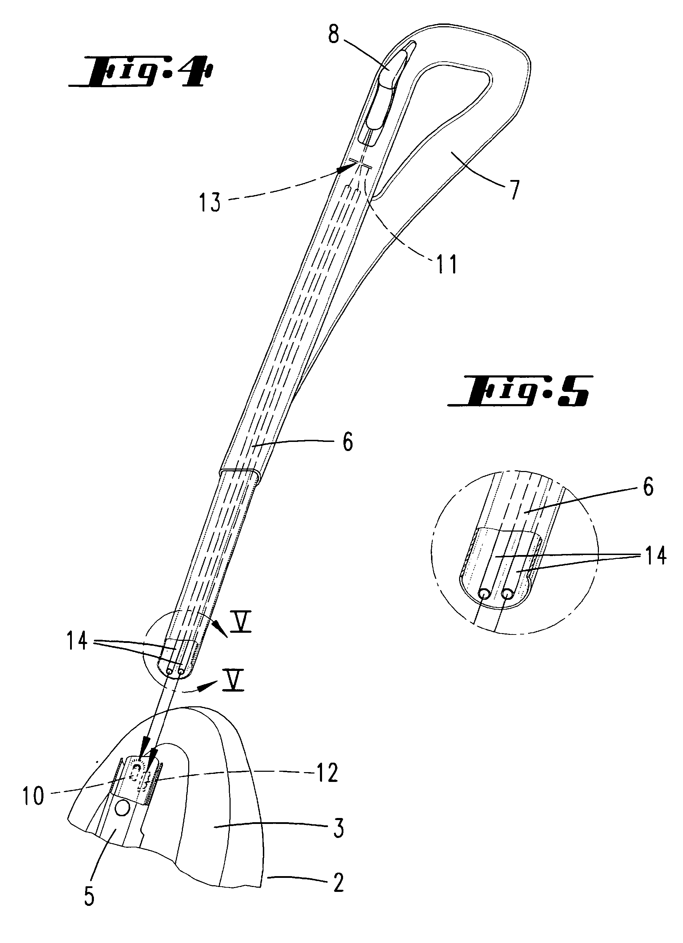

Die Figuren 4 und 5 zeigen eine zweite Ausführungsform, bei welcher gleich den ersten Ausführungsbeispielen eine Lichtwelle vom Basisteil 2 ausgesandt wird. Hierbei ist jedoch zwischen der Lichtquelle 10 und dem Beeinflussungselement 13 (Reflektionsteil 11) sowie zwischen dem Beeinflussungselement 13 und dem Lichtwellensensor 12 jeweils ein Lichtleiter 14 vorgesehen, so beispielsweise in Form eines Glasfaserelements. Zufolge dieser Anordnung ist erreicht, dass die Strecke zwischen Lichtquelle 10 bzw. Lichtwellensensor 12 und Beeinflussungselement 13 nicht streng gradlinig verlaufen muss. Vielmehr kann ein solche Lichtleiter 14 aufweisender Stiel 6 auch eine Biegung aufweisen.

Durch die erfindungsgemäße Ausgestaltung ist erreicht, dass der Stiel 6, insbesondere der Betätigungsgriff 7 und der Leistungssteller 8 stromlos gehalten sind. Auch bedarf es im Bereich der Steckverbindung zwischen Stiel 6 und Basisteil 2 keiner Elektrosteckaufnahmen oder dergleichen.

Weiter ist die beschriebene Signalvorrichtung auch im Schnittstellenbereich zwischen Basisteil 2 und Vorsatzgerät 9 einsetzbar, dort insbesondere unter Zwischenschaltung von Lichtleitern, wobei ein Beeinflussungselement 13 vorsatzgeräteseitig beispielsweise unterdruckbeaufschlagt verstellbar ist.

Auch kann durch die erfindungsgemäße Ausgestaltung eine Energieübertragung von dem Basisteil 2 in den Stiel 6, insbesondere in den Betätigungsgriff 7 erfolgen. So beispielsweise durch ein im Bereich des Betätigungsgriffs 7 vorgesehenes lichtempfindliches Element, welches Energie erzeugt, so beispielsweise eine Solarzelle. Hiermit lässt sich weiter beispielsweise ein im Bereich des Betätigungsgriffes 7 angeordnetes Anzeigeelement bestromen oder eine elektronische Verarbeitung der Lichtsignale im Handgriff durchführen.

## Patentansprüche

1. Staubsauger mit einem einen Elektromotor aufweisenden Basisteil (2) und einem hiermit steckverbindbaren Stiel (6) mit Betätigungsgriff (7) und/oder einem Vorsatzgerät (9) mit einer Stelleinheit zur Steuerung der Leistung des Elektromotors, wobei ein zur Steuerung der Leistung des Elektromotors erforderliches Signal von dem Stiel (6) und/oder Vorsatzgerät (9) zum Basisteil (2) geleitet wird und in dem Basisteil ein Signalempfänger angeordnet ist, **dadurch gekennzeichnet, dass** in dem Basisteil (2) eine Lichtquelle (10) als Signalgeber angeordnet ist, dass das Signal durch eine Beeinflussung einer von dem Basisteil (2) ausgesandten Lichtwelle erzeugt ist, dass der Signalempfänger ein Lichtwellensensor (12) ist und dass die Beeinflussung des Signals durch lediglich mechanische Verstellung eines Beeinflussungselements (13) erreicht ist.

2. Staubsauger nach Anspruch 1, **dadurch gekennzeichnet, dass** das Beeinflussungselement (13) ein Reflektionsteil (11) ist.

3. Staubsauger nach einem der Ansprüche 1 oder 2, **dadurch gekennzeichnet, dass** zwischen der Lichtquelle (10) und dem Beeinflussungselement (13) ein Lichtleiter(14) angeordnet ist.

4. Staubsauger nach Anspruch 3, **dadurch gekennzeichnet, dass** der Lichtleiter (14) ein Glasfaserelement ist.

5. Staubsauger nach Anspruch 3, **dadurch gekennzeichnet, dass** der Lichtleiter (14) ein Glaselement ist.

6. Staubsauger nach Anspruch 3, **dadurch gekennzeichnet, dass** der Lichtleiter (14) eine Lichtröhre ist.

7. Staubsauger nach Anspruch 3, **dadurch gekennzeichnet, dass** der Lichtleiter (14) ein transparentes Kunststoffteil ist.

## Claims

1. Vacuum cleaner (1) comprising a base part (2), which has an electric motor, and a shank (6) which can be plug-connected to said base part and has an operating handle (7) and/or an attachment (9) with an actuating unit for controlling the power of the electric motor, a signal which is required to control the power of the electric motor being passed from the shank (6) and/or attachment (9) to the base part (2), and a signal receiver being disposed in the base part, **characterized in that** a light source (10) is disposed in the base part (2) as the signal transmitter, **in that** the signal is generated by influencing a light wave which is emitted by the base part (2), **in that** the signal receiver is a light-wave sensor (12), and **in that** the signal is influenced by only mechanical adjustment of an influencing element (13).

2. Vacuum cleaner according to Claim 1, **characterized in that** the influencing element (13) is a reflection part (11).

3. Vacuum cleaner according to either of Claims 1 and 2, **characterized in that** a light guide (14) is disposed between the light source (10) and the influencing element (13).

4. Vacuum cleaner according to Claim 3, **characterized in that** the light guide (14) is a glass-fiber element.

5. Vacuum cleaner according to Claim 3, **characterized in that** the light guide (14) is a glass element.

6. Vacuum cleaner according to Claim 3, **characterized in that** the light guide (14) is a light tube.

7. Vacuum cleaner according to Claim 3, **characterized in that** the light guide (14) is a transparent plastics part.

## Revendications

1. Aspirateur comprenant une partie de base (2) présentant un moteur électrique et un manche (6) pouvant s'y raccorder par enfichage avec une poignée de commande (7) et/ou un appareil adaptable (9) avec une unité de réglage pour commander la puissance du moteur électrique, dans lequel un signal nécessaire pour commander la puissance du moteur électrique est guidé par le manche (6) et/ou l'appareil adaptable (9) à la partie de base (2) et un récepteur de signal est aménagé dans la partie de base, **caractérisé en ce qu'**une source de lumière (10) est aménagée dans la partie de base (2) comme émetteur de signal, **en ce que** le signal est généré par l'influence d'une onde lumineuse émise par la partie de base (2), **en ce que** le récepteur de signal est un capteur d'onde lumineuse (12) et **en ce que** l'influence du signal est obtenue par un réglage purement mécanique d'un élément d'influence (13).

2. Aspirateur selon la revendication 1, **caractérisé en ce que** l'élément d'influence (13) est une partie de réflexion (11).

3. Aspirateur selon l'une quelconque des revendications 1 ou 2, **caractérisé en ce qu'**un guide d'ondes optiques (14) est aménagé entre la source de lumière (10) et l'élément d'influence (13).

4. Aspirateur selon la revendication 3, **caractérisé en ce que** le guide d'ondes optiques (14) est un élément en fibres de verre.

5. Aspirateur selon la revendication 3, **caractérisé en ce que** le guide d'ondes optiques (14) est un élément en verre.

6. Aspirateur selon la revendication 3, **caractérisé en ce que** le guide d'ondes optiques (14) est un tube lumineux.

7. Aspirateur selon la revendication 3, **caractérisé en ce que** le guide d'ondes optiques (14) est une pièce transparente en matériau synthétique.
